Europäisches Patentamt

European Patent Office

Office européen des brevets

(11) Veröffentlichungsnummer: **0 317 693**
**A2**

## EUROPÄISCHE PATENTANMELDUNG

(21) Anmeldenummer: **88100517.7**

(22) Anmeldetag: **15.01.88**

(51) Int. Cl.4: **B29B 13/02**

(30) Priorität: **10.11.87 DE 3738191**

(43) Veröffentlichungstag der Anmeldung:
**31.05.89 Patentblatt 89/22**

(84) Benannte Vertragsstaaten:
**AT BE CH DE ES FR GB GR IT LI LU NL SE**

(71) Anmelder: **Claassen, Henning J.**
**Industriegebiet Hafen**
**D-2120 Lüneburg(DE)**

(72) Erfinder: **Claassen, Henning J.**
**Industriegebiet Hafen**
**D-2120 Lüneburg(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) Vorrichtung zum Verflüssigen eines thermoplastischen, hochpolymeren Werkstoffes.

(57) Eine Vorrichtung zum Verflüssigen eines thermoplastischen, hochpolymeren Werkstoffes weist einen Vorratsbehälter für den thermoplastischen Werkstoff, eine Heizeinrichtung zur Erwärmung des in dem Vorratsbehälter befindlichen Werkstoffes, einen unter dem Vorratsbehälter angeordneten, eine Auffangwanne für den verflüssigten thermoplastischen Werkstoffes aufnehmenden Basisteil sowie eine Regeleinrichtung auf, die in Abhängigkeit von einem Vergleich zwischen einem vorgegebenen Soll-Wert und einem von einem Fühler ermittelten Ist-Wert die Heizeinrichtung ansteuert. Um auch raschen Änderungen der Betriebsbedingungen folgen zu können, wird als Ist-Wert die aus der Auffangwanne abtransportierte Menge an verflüssigtem thermoplastischem Werkstoff erfaßt und der Regeleinrichtung zugeführt; ein geeignetes Maß für diese Menge stellt insbesondere die Drehzahl einer als Fördereinrichtung dienenden Pumpe dar.

## Vorrichtung zum Verflüssigen eines thermoplastischen, hochpolymeren Werkstoffes

Die Erfindung betrifft eine Vorrichtung zum Verflüssigen eines thermoplastischen, hochpolymeren Werkstoffes der im Oberbegriff des Anspruchs 1 angegebenen Gattung.

Solche Verflüssigungsvorrichtungen sind beispielsweise aus der DE-PS 28 36 545 oder der DE-PS 36 00 020 bekannt und weisen einen Vorratsbehälter für den thermosplastischen, hochpolymeren Werkstoff, eine Heizeinrichtung zur Erwärmung des in dem Vorratsbehälter befindlichen Werkstoffes sowie eine unter dem Vorratsbehälter angeordnete Auffangwanne für den verflüssigten Werkstoff auf, der von hier aus der Weiterverarbeitung, z. B. einer Auftragvorrichtung, zugeführt wird. In dem Vorratsbehälter, der auch als "Vorschmelzbereich" bezeichnet werden kann, muß eine relativ genau definierte Temperatur des hochpolymeren Werkstoffes eingehalten werden, um die weitere Behandlung nicht ungünstig zu beeinflussen; diese Vorschmelztemperatur liegt in aller Regel etwa 20 bis 30 % unter der Endtemperatur, auf der sich der verflüssigte thermoplastische Werkstoff in der Auffangwanne befindet.

Zur Einhaltung dieser für die weitere Verarbeitung wesentlichen Temperatur im Vorschmelzbereich sind entweder in den Wänden des Vorschmelzbereiches oder aber in seinem Boden Temperatur-Fühler vorgesehen, die die dort vorliegende Ist-Temperatur erfassen und einer Regeleinrichtung zuführen, wo ein Vergleich mit einem vorgegebenen Soll-Wert und eine Entsprechende Einstellung der Wärmezufuhr zu dem Vorschmelzbereich erfolgen.

Es hat sich jedoch herausgestellt, daß eine solche Temperaturregelung den auftretenden Schwankungen der Betriebsverhältnisse nicht rasch genug folgen kann, so daß es in aller Regel zu starken Abweichungen von den vorgegebenen Soll-Werten kommt.

Als Alternative hierzu ist auch bereits versucht worden, in der Masse im Vorschmelzbereich, beispielsweise unter dem Boden des Vorratsbehälters, einen Temperatur-Fühler vorzusehen, der direkt die Temperatur der Masse des thermoplastischen, hochpolymeren Werkstoffes erfaßt. Auch hierbei kommt es jedoch zu Verzögerungen beim Ansprechen der Temperatur-Erfassung, die im wesentlichen auf die schlechte Wärmeleitfähigkeit der thermoplastischen, hochpolymeren Werkstoffe und damit auf eine sehr inhomogene Temperaturverteilung zurückzuführen sind.

Der Erfindung liegt deshalb die Aufgabe zugrunde, eine Vorrichtung zum Verflüssigen von thermoplastischen, hochpolymeren Werkstoffen der angegebenen Gattung zu schaffen, bei der die oben erwähnten Nachteile nicht auftreten. Insbesondere soll eine Verflüssigungsvorrichtung vorgeschlagen werden, die eine sehr exakte, praktisch verzögerungsfreie Einstellung der Temperatur im Vorschmelzbereich auf einen vorgegebenen Soll-Wert ermöglicht, und zwar auch bei starken Änderungen der Betriebsverhältnisse.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen auf folgenden Überlegungen:

Wie oben angedeutet wurde, sind thermoplastische, hochpolymere Werkstoffe extrem schlechte Wärmeleiter, während die Metallwände des Vorschmelzbereiches, in denen sich üblicherweise sowohl die Temperatur-Fühler als auch die Heizelemente der Heizeinrichtung befinden, sehr gute Wärmeleiter sind. Dadurch ergibt sich jedoch ein schlechter Wärmeübergang sowohl von den Heizelementen zu der aufgeschmolzenen Masse als auch von der masse zu den Temperatur-Fühlern, so daß insbesondere bei Änderungen der Betriebsbedingungen eine sehr ungleichmäßige Temperaturverteilung in der Masse im Vorschmelzbereich auftritt.

Besonders gravierende Änderungen der Betriebsbedingungen stellen Schwankungen in der Geschwindigkeit dar, mit der der verflüssigte, hochpolymere, thermoplastische Werkstoff aus der Auffangwanne abtransportiert und der Verarbeitung zugeführt wird. Bei diesen Änderungen, insbesondere beim Anfahren aus dem Bereitschaftszustand auf volle Leistung, kommt es zu Temperaturänderungen in der Masse, die mit den herkömmlichen Temperatur-Fühlern nicht erfaßt und bei der Ansteuerung der Heizelemente dementsprechend nicht berücksichtigt werden können.

Erfindungsgemäß wird nun vorgeschlagen, zur Vermeidung dieser Probleme als Ist-Wert für die Regelung die ansich entscheidende Größe heranzuziehen, nämlich die Menge des aus der Auffangwanne abtransportierten, verflüssigten, thermoplastischen Werkstoffes. d. h.. die bisher übliche temperaturabhängige Regelung durch eine mengenabhängige Regelung zu ersetzen. Bei kleinen Auftragsmengen wird also mit relativ geringer Heizleistung gearbeitet, während bei einer Erhöhung der Auftragsmenge auf den Maximalwert auf volle Wärmeleistung eingestellt wird; dies stellt jedoch kein Problem dar, da dann auch die angeschmolzene Masse aus dem Vorratsbehälter entsprechend schnell abtransportiert wird, es also nicht zu einer zu hohen und damit nachteiligen Erwärmung der Masse im Vorschmelzbehälter kommen kann.

Für die Erfassung der aus der Auffangwanne abtransportierten Menge des verflüssigten, thermosplastischen, hochpolymeren Werkstoffes stehen verschiedene Methoden zur Verfügung, beispielsweise die Verwendung eines zusätzlichen Durchfluß-messers in der Entnahmeleitung der Verflüssigungsvorrichtung. Nach einer bevorzugten Ausführungsform wird jedoch die Entnahmemenge indirekt gemessen, nämlich aus der Drehzahl der Pumpe ermittelt, die zur Förderung des verflüssigten, thermoplastischen Werkstoffes aus der Auffangwanne dient. Die Drehzahl kann mechanisch, optisch oder elektrisch erfaßt und der Regeleinrichtung zugeführt werden, die einen Vergleich mit einem vorgegebenen Soll-Wert vornimmt und die Heizelemente der Heizeinrichtung entsprechend ansteuert.

Wie erwähnt, sind die bisher auf dem Markt erhältlichen Verflüssigungsvorrichtungen im Vorschmelzbereich mit Temperatur-Fühlern versehen; diese Verflüssigungsvorrichtungen können auch weiterhin eingesetzt und zusätzlich erfindungsgemäß mit einem Drehzahl-Fühler versehen werden, der den Ist-Wert der Drehzahl der Pumpe asl Maß für die Fördermenge des verflüssigten, thermoplastischen Werkstoffes der entsprechend angepaßten Regeleinrichtung zuführt.

Auch diese in aller Regel fest eingebauten Temperatur-Fühler können weiterverwendet werden, und zwar als Grenzschalter, die bei Überschreiten einer vorgegebenen Maximaltemperatur ansprechen und dann die Wärmezufuhr abschalten. Eine Funktion bei der Temperaturregelung des Vorschmelzbereiches übernehmen diese Temperatur-Fühler selbstverständlich nicht.

Dabei können die Temperatur-Fühler entweder in den Wänden und im Boden des Vorschmelzbereiches oder in der Masse selbst angeordnet werden.

Eie Erfindung wird im folgenden anhand von Ausführungsbeispielen und unter Bezugnahme auf die vorliegenden schematischen Zeichnungen näher erläutert. Es zeigen

Fig. 1 eine Vertikal-Mittelschnitt durch eine Vorrichtung zum Verflüssigen eines Schmelzklebers in deren Symmetrieebene, und

Fig. 2 einen senkrechten Schnitt durch eine Vorrichtung zum Verflüssigen eines Klebstoffes auf der Basis von Polyurethan.

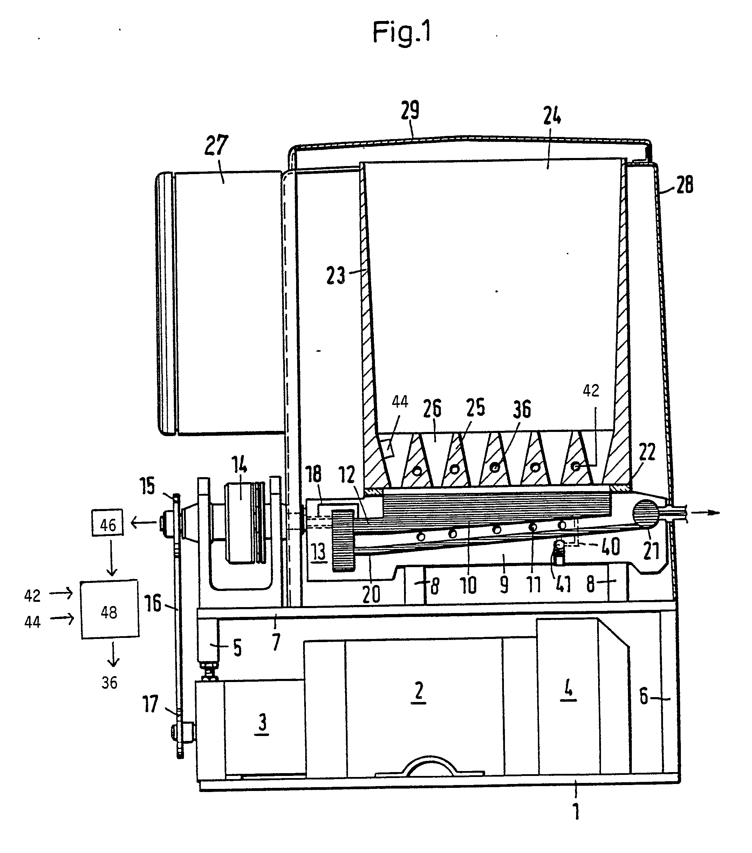

Die in Fig. 1 dargestellte Vorrichtung zum Verflüssigen eines Schmelzklebers hat den aus der DE-PS 28 36 545 bekannten Grundaufbau und weist auf einer Grundplatte 1 einen elektrischen Antriebsmotor 2 auf, dem ein Untersetzungsgetriebe 3 nachgeschaltet ist. An der anderen Seite des Elektromotors 2 befindet sich ein elektrischer Schaltschrank 4.

Auf der Grundplatte 1 wird durch Beine 5 und 6 eine obere Tragplatte 7 gehalten, die mittels Stützen 8 eine flache, aus einem Leichtmetallgußkörper bestehende Auffangwanne 9 trägt. Die Auffangwanne 9 fängt in ihrer Mulde 10 den auf die Auftragtemperatur erhitzten Schmelzkleber auf, der in Fig. 1 schwarz ausgelegt ist. Unterhalb der Mulde 10 befinden sich in entsprechenden Bohrungen elektrische Widerstandsheizstäbe 11, die zum Erwärmen des Inhalts der Auffangwanne auf die gewünschte, einstellbare Endtemperatur dienen. Zu diesem Zweck ist in der Nähe des Bodens der Auffangwanne 9 ein Temperaturfühler vorgesehen, der über einen Thermostat in üblicher Weise die Temperatur in der Auffangwanne 9 konstant hält.

Von der Auffangwanne 9 führt eine Leitung 12 zu einer nur schematisch angedeuteten Zahnradpumpe 13, die über eine Magnetkupplung 14, eine Riemenscheibe 15, einen Riemen 16 und eine auf der Ausgangswelle des Getriebes 3 sitzende weitere Riemenscheibe 17 angetrieben ist. Eine Rückleitung 18 für durch die Lagerungen der Räder der Zahnradpumpe 13 austretenden flüssigen Schmelzkleber ist in der Zeichnung ebenfalls angedeutet.

Von der Zahnradpumpe 13 führt eine ebenfalls von Elektroheizstäben 11 auf der erforderlichen Temperatur gehaltene Leitung 20 zu einem Sieb 21, das den Austritt von unerwünschten Festkörperteilchen mit dem verflüssigten Schmelzkleber verhindert. Hinter dem Sieb 21 befindet sich ein üblicher, nicht mehr dargestellter Anschluß, für eine ebenfalls beheizbare und auf konstanter Temperatur haltbare Leitung, die zum eigentlichen Auftragsgerät führt.

Auf dem Rand der Auffangwanne 9 sitzt eine Wärmeisolierschicht 22, in aller Regel eine mit Kunststoff verpreßte Astbestschicht, die ausreichend dick ist, um einen unzulässig hohem Wärmefluß aus der auf relativ hoher Temperatur stehenden Auffangwanne 9 in die darüber befindliche, im Horizontalschnitt quadratischen Querschnitt aufweisende Seitenwand 23 des Vorratsbehälters 24 zu verhindern. Mit der Seitenwand 23 des Vorratsbehälters 12 ist der perforierte Boden des Vorratsbehälters 24 in einem Stück gegossen. Der perforierte Boden 25 weist sich nach unten verjüngend Perforationen 26 auf, durch die der vorgeschmolzene Schmelzkleber nach unten in die Auffangwanne 9 fließt, die die eigentliche Hauptschmelzzone bildet. Die Temperatur der Auffangwanne 9 ist in der Regel etwa 20 bis 30% höher als die Temperatur im Bereich des die Vorschmelzzone bildenden perforierten Bodens 25 und in dem anschließenden Bereich des Vorratsbehälters 23.

Der Vorratsbehälter 24 ist von einem Wärmeisoliermantel 28 im Abstand umgeben und oben mittels eines Deckels 29 verschlossen. Zum Einfüllen des im allgemeinen granulatförmigen, kalten Schmelzklebers wird der Deckel abgehoben oder abgeschwenkt. Am Mantel 28 sitzt ein Schaltschrank 27, der die elektrischen Schaltelemente für die Regelung der Temperatur in den verschiedenen Heizelementen dieser Vorrichtung aufnimmt.

Der perforierte Boden 25 wird durch die aus Fig. 1 ersichtlichen, einander kreuzenden Rippen 25 gebildet, in denen sich Bohrungen für Heizelemente 36 befinden, im allgemeinen mittels Schamattrohren isolierte elektrische Widerstandsleiter.

Zwischen der Leitung 20 und der Mulde 10 der Auffangwanne 9 ist eine Kurzschlußleitung 40 vorgesehen, die durch ein Rückschlagventil 41 gesichert ist.

In Fig. 1 sind auch schematisch die Mittel angedeutet, mit denen die Temperatur im Vorschmelzbereich, also im wesentlichen auf der Höhe des perforierten Bodens 25, auf einem vorgegebenen Soll-Wert gehalten werden kann, nämlich ein erster Temperatur-Fühler 42, der sich in einer Bohrung in einer Rippe des perforierten Bodens 25 befindet, ein zweiter Temperatur-Fühler 44 der sich direkt in der erwärmten und damit verflüssigten Masse im Bereich des perforierten Bodens 25 befindet, ein dritter Fühler 46 zur Erfassung der Drehzal der Pumpe 13 und die eigentliche Regeleinrichtung 48, die die entsprechenden Ist-Werte von den Fühlern 42, 44 und 46 empfängt und daraus ein Ansteuersignal für die Heizelemente 36 bildet, wie in Fig. 1 angedeutet ist.

Fig. 1 soll nur schematisch die beiden prinzipiellen Möglichkeiten für die Erfassung der Temperatur im Vorschmelzbereich darstellen, nämlich einmal im perforierten Boden 25, wie es in Fig. 1 dargestellt ist, oder in einer Seitenwand und zum anderen in der Masse selbst, nämlich durch den Fühler 44. Für die meisten Anwendungszweck dürfte es jedoch ausreichen, wenn nur einer der beiden Temperatur-Fühler 42 oder 44 vorgesehen ist.

Fig. 1 deutet die Erfassung der Drehzahl der Pumpe 13 mittels des Fühlers 46 an der Riemenscheibe 15 an, deren Drehzahl, beispielsweise elektrooptisch, also mittels einer Lichtschranke, deren Lichtstrahl durch die perforierte Riemenscheibe 15 unterbrochen wird, gemessen werden kann.

Auch andere, für diesen Einsatzzweck übliche Drehzahlfühler können eingesetzt werden; außerdem ist es schließlich noch möglich, die Drehzahl der Pumpe 13 an einer anderen Stelle zu erfassen, beispielsweise an der Riemenscheibe 17, dem Riemen 16, der Magnetkuppel oder direkt an der Pumpe 13.

Die eigentliche Temperaturregelung erfolgt nur mittels des Fühlers 46, der den Ist-Wert für die Drehzahl der Pumpe 13 (oder einen entsprechenden, davon abhängigen Wert) erfaßt und der Regeleinrichtung 48 zuführt, wo dieser Ist-Wert mit einem Soll-Wert verglichen und die Wärmezufuhr zu den Heizelementen 36 entsprechend gesteuert werden.

Die Signale der Temperatur-Fühler 42 und 44 dienen nur zur Einstellung eines oberen Grenzwertes für die Temperatur, d. h., steigt aus irgendwelchen Gründen die Temperatur der Masse im Bereich des perforierten Bodens 25 über einen zulässigen, maximalen Wert hinaus an, so übersteuern die entsprechenden Signale der Temperatur-ühler 42 und 44 die Regeleinrichtung 48, so daß in aller Regel die Heizelemente 36 abgeschaltet und damit die Wärmezufuhr zu dem Vorschmelzbereich unterbrochen werden.

Diese mengenabhängige Temperaturregelung eignet sich nicht nur für den stationären, eingeschwungenen Zustand, sondern spricht auch bei Änderungen der Betriebsbedingungen, insbesondere bei einer starken Erhöhung oder Verringerung der Abnahmemenge aus der Auffangwanne 9 an; insbesondere bei einer starken Erhöhung der Abnahmemenge auf maximalen Wert wird mit voller Heizleistung gearbeitet, um zu gewährleisten, daß die Temperatur im Bereich des perforierten Bodens 25 auf dem vorgegebenen Soll-Wert bleibt.

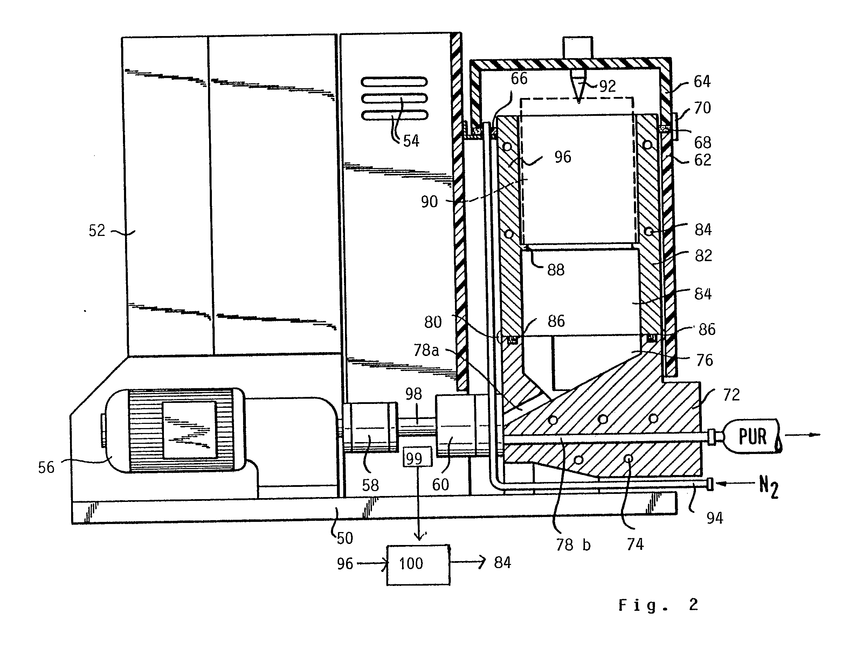

Fig. 2 zeigt den Grundaufbau einer aus der DE-PS 36 00 020 bekannten Vorrichtung zum Verflüssigen von Klebstoffen auf der Basis von Polyurethan.

Diese Verflüssigungsvorrichtung weist eine Grundplatte 50 auf, die einen Schaltschrank 52, der die elektrischen Schaltelemente für die Regelung der Temperatur an den verschiedenen Heizelementen aufnimmt und mit Durchlüftungsschlitzen 54 versehen ist, einen Elektromotor 56 und auf der gemäß der Darstellung in Fig. 2 rechten Seite den eigentlichen Verflüssigungsteil trägt. Der Elektromotor 56 treibt über eine Kupplung, insbesondere eine Magnetkupplung, oder ein Getriebe, im allgemeinen ein Untersetzungsgetriebe, wie durch das Bezugszeichen 58 angedeutet ist, eine Zahnradpumpe 60 für die Förderung des erwärmten und damit verflüssigten Polyurethan-Klebstoffes.

Der eigentliche Verflüssigungsteil befindet sich in einer Wärmeschutzhaube 62, die auch die empfindlichen elektronischen Bauelemente des Schaltschrankes 52 abschirmt und an ihrem oberen Ende durch einen schwenkbar gelagerten Deckel 64 verschlossen ist. Zur Abdichtung des Spaltes zwischen dem Deckel 64 und dem unteren Bereich des Verflüssigungsteils dienen Dichtungen 66 bzw. 68. Außerdem ist eine schematisch angedeutete Arretierung 70 vorgesehen, die den Deckel 64 in seiner aus Fig. 2 ersichtlichen Arbeitslage hält.

Der eigentliche Verflüssigungsteil weist einen blockförmigen Unterbau 72 mit Heizungsbohrungen auf, in denen sich Heizelemente 74, nämlich mittels Schamottrohren isolierte elektrische Widerstandsleiter, befinden.

An seinem oberen Ende enthält der Block 72 eine als Auffangwanne ausgestaltete Aussparung 76, die über einen Kanal 78 a mit der Zahnradpumpe 60 verbunden ist. Von der Zahnradpumpe 60 verläuft ein weiterer Teil 78 b des Förderkanals zu dem Auslaß für den verflüssigten Klebstoff, der durch "PUR" als Kurzzeichen für Polyurethan angedeutet ist.

Auf dem Block 72 ist durch klammern 80 der eigentliche Vorratsbehälter 82 lösbar befestigt, dessen Wände ebenfalls mit Heizungsbohrungen versehen sind, in denen sich Heizelemente 84, beispielsweise mittels Schamottrohren isolierte elektrische Widerstandsheizelemente, befinden.

Zwischen der Oberkante der Wände des Blokkes 72 im Bereich der Aussparung 76 und der unterkante der Wände des Vorratsbehälters 82 sind Dichtungen 86 vorgesehen, insbesondere Isolierungen auf der Basis von Mineralfasern, zweckmäßigerweise Asbest.

Wie man aus Fig. 2 erkennt, liegen die beiden oberen Dichtungen 64, 68 an der Außenwand des nach oben offenen Vorratsbehälters 82 an.

Der Vorratsbehälter 82 weist zwei Teile auf, Nämlich ein unteres Puffervolumen 84 und einen oberen Teil, der durch einen schmalen, von seiner Innenwand nach innen vorstehenden, umlaufenden Steg 88 von dem unteren Teil 86 getrennt ist. Auf diesem Steg 88 liegt die Unterkante eines nach unten offenen Transportbehälters 90 für den Polyurethan-Klebstoff auf, der in Fig. 2 mit gestrichelten Linien angedeutet ist.

Die Innenkante des Deckels 64 ist mit einem nach unten vorstehenden, spitzen Dorn 92 versehen, dessen Spitze in die nach oben gewandte Bodenfläche des Transportbehälters 90 eindringt.

Eine Leitung für ein inertes Gas, insbesondere Stickstoff, verläuft unter dem Block 72 hindurch, dann seitlich an dem Vorratsbehälter 82 vorbei nach oben und mündet in den Hohlraum, der zwischen dem oberen Ende des Transportbehälters 90 und dem Deckel 64 ausgebildet ist.

In einer der Bohrungen in der Wand des Vorratsbehälters 82 ist ein Temperatur-Fühler 96 angeordnet. Als Alternative hierzu oder auch zusätzlich kann ein weiterer Fühler für die Temperatur der erwärmten Masse (nicht dargestellt) vorgesehen sein.

An der Welle 98 zwischen der Kupplung bzw. dem Getriebe 58 und der Zahnradpumpe 60 ist ein Fühler 99 vorgesehen, der die Drehzahl der Welle 98 feststellt und ein entsprechendes Signal als Ist-Wert auf eine Regeleinrichtung 100 gibt, die außerdem das Ausgangssignal des Temperatur-Fühlers 96 empfängt. Dieser Fühler 99 kann mechanisch, elektrisch oder optisch auf die Drehung der Welle 98 ansprechen.

Bei normalem Betrieb wird der Ist-Wert für die Drehzahl der Welle 98 von dem Fühler 99 in der Regeleinrichtung 100 mit einem vorgegebenen Soll-Wert verglichen und daraus ein Regelsignal für die Heizelemente 84 des Vorratsbehälters 82 gewonnen.

Bei Überschreiten einer vorgegebenen Temperatur in der Masse, die von dem Temperatur-Fühler 96 festgestellt wird, wird die Regeleinrichtung 100 übersteuert und in aller Regel die Wärmezufuhr abgeschaltet, um eine zu starke Erwärmung des empfindlichen Polyurethans zu verhindern.

## Ansprüche

1. Vorrichtung zum Verflüssigen eines thermoplastischen, hochpolymeren Werkstoffes
   a) mit einem Vorratsbehälter für den thermoplastischen Werkstoff,
   b) mit einer Heizeinrichtung zur Erwärmung des in dem Vorratsbehälter befindlichen thermoplastischen Werkstoffes.
   c) mit einem unter dem Vorratsbehälter angeordneten, eine Auffangwanne für den den verflüssigten thermoplastischen Werkstoff aufnehmenden Basisteil, und
   d) mit einer Regeleinrichtung zur Ansteuerung der Heizeinrichtung für den Vorratsbehälter in Abhängigkeit von dem Ergebnis eines Vergleiches zwischen einem vorgegebenen Soll-Wert und einem von einem Fühler ermittelten Ist-Wert, **dadurch gekennzeichnet**, daß
   e) der Fühler (46; 99) die aus der Auffangwanne (9; 76) abtransportierte Menge des verflüssigten, thermosplastischen, hochpolymeren Werkstoffes erfaßt und der Regeleinrichtung (48; 100) ein entsprechendes Signal als Ist-Wert zuführt.

2. Vorrichtung nach Anspruch 1 mit einer Pumpe für die Förderung des verflüssigten, thermoplastischen Werkstoffes aus der Auffangwanne, dadurch gekennzeichnet, daß der Fühler (46; 99) die Drehzahl der Pumpe (13; 60) erfaßt.

3. Vorrichtung nach Anspruch 2, dadurch gekennzeichnet, daß der Fühler (46; 99) die Drehzahl einer Riemenscheibe (15) oder einer Welle (98) erfaßt.

4. Vorrichtung nach einem der Ansprüche 2 oder 3, dadurch gekennzeichnet, daß der Fühler (48; 99) die Drehzahl elektrisch, insbesondere induktiv, mechanisch oder elektrooptisch erfaßt.

5. Vorrichtung nach einem der Ansprüche 1 bis 4 mit Fühlern für die Temperatur der Wand des Vorratsbehälters und/oder der Masse des angeschmolzenen, thermoplastischen Werkstoffes in dem Vorratsbehälter, dadurch gekennzeichnet, daß die Ausgangssignale der Temperatur-Fühler (42;(6) der Regeleinrichtung (46; 100) zur Begrenzung des Temperaturwertes auf einen Maximal-Wert zugeführt werden.

## Fig.1

Fig. 2